(19) Europäisches Patentamt
European Patent Office
Office européen des brevets

(11) **EP 0 868 098 A1**

(12) **EUROPÄISCHE PATENTANMELDUNG**

(43) Veröffentlichungstag:
**30.09.1998 Patentblatt 1998/40**

(51) Int. Cl.[6]: **H04Q 3/66**, H04Q 3/00

(21) Anmeldenummer: 98104709.5

(22) Anmeldetag: **16.03.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **27.03.1997 DE 19713169**
**13.10.1997 DE 19745250**

(71) Anmelder:
**SIEMENS AKTIENGESELLSCHAFT**
**80333 München (DE)**

(72) Erfinder: **Hummel, Heinrich**
**85232 Günding (DE)**

(54) **Verfahren zur Leitwegsermittlung**

(57)    Der Leitweg einer Verbindung, die innerhalb eines Kommunikationsnetzes mit einer Vielzahl von Netzknoten von einem an einem Ursprungsknoten angeschlossenen Endgerät zu einem an einem Zielnetzknoten angeschlossenen Zielendgerät aufzubauen ist, wird unter Verwendung des Dijkstra-Routing-Algorithmus ermittelt. Dazu werden die Längen der Netzkanten zwischen den einzelnen Netzknoten des Kommunikationsnetzes auf der Grundlage der geografischen Koordinaten der einzelnen Netzknoten bestimmt. Unter Berücksichtigung der so bestimmten Netzkantenlängen wird mit Hilfe des Dijkstra-Routing-Algorithmus der kürzeste Leitweg entlang der Netzkanten ermittelt.

**Beschreibung**

Die Erfindung betrifft ein Verfahren zum Ermitteln des Leitwegs einer von einem an einem Ursprungsknoten angeschlossenen Endgerät zu einem an einem Zielnetzknoten angeschlossen Zielendgerät aufzubauenden Verbindung innerhalb eines Kommunikationsnetzes mit einer Vielzahl von Netzknoten und zwischen diesen Netzknoten verlaufenden Netzkanten, unter Verwendung des Dijkstra-Routing-Algorithmus.

Aufgabe der Erfindung ist es, ein solches Verfahren zu verbessern.

Dies wird erfindungsgemäß durch Ermitteln der Längen der Netzkanten zwischen den einzelnen Netzknoten des Kommunikationsnetzes auf der Grundlage von den einzelnen Netzknoten zuordenbar gespeicherten Angaben geografischer Koordinaten und durch Bestimmen des kürzesten Leitwegs entlang der Netzkanten mit Hilfe des Dijkstra-Routing-Algorithmus unter Berücksichtigung der ermittelten Netzkantenlängen erreicht.

Als Länge einer Netzkante zwischen zwei Netzknoten wird jeweils die Länge des kürzesten auf der Erdoberfläche verlaufenden und die geografischen Positionen beider Netzknoten verbindenden Weges bestimmt.

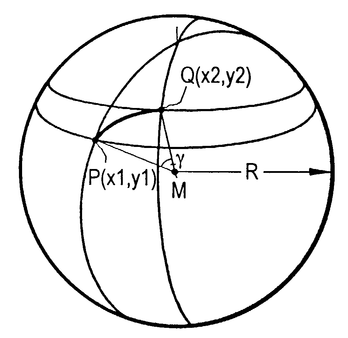

Nachfolgend wird unter Bezugnahme auf die Figur dargelegt, wie auf der Grundlage der geografischen Koordinaten (geografische Längen- und Breitenangaben) der kürzeste, zwei Orte auf der Erdoberfläche verbindende Weg ermittelt werden kann.

Die Figur zeigt in schematischer Darstellung eine Erdkugel mit dem Mittelpunkt M, dem Erdradius R und zwei Netzknoten repräsentierende Punkte P und Q auf der Oberfläche, die die Längen- und Breitenangaben x1,y1 bzw. x2,y2 haben. Die den Koordinaten x1 und x2 zugeordneten Längenkreise und den Koordinaten y1 und y2 zugeordneten Breitenkreise sind ebenfalls dargestellt.

Die Länge D(P,Q) des kürzesten auf der Oberfläche verlaufenden Weges zwischen den Punkten P und Q, läßt sich dann beispielsweise mittels eines mit Standardmethoden der analytischen Geometrie zu gewinnenden Ausdrucks für den Winkel

$$\gamma = \angle \, PMQ =$$
$$= \arccos[\, \cos y2 \, {}^* \cos y1 \, {}^* \cos(x2-x1) + \sin y2 \, {}^* \sin y1 \,]$$

exakt bestimmen zu D(P,Q) = R $^*$ |$\gamma$| , falls $\gamma$ im Bogenmaß eingesetzt wird.

Die Längenangaben x1, x2 sind dabei entweder beide in westlicher- oder beide in östlicher Länge anzugeben. Analog sind die Breitenangaben y1, y2 entweder beide in nördlicher- oder beide in südlicher Breite einzusetzen. Die Umrechnung zwischen südlicher und nördlicher Breite bzw. östlicher und westlicher Länge kann durch Vorzeichenwechsel erfolgen.

Zur Verringerung des zur Auswertung der obigen Ausdrücke notwendigen Berechnungsaufwands können mit trigonometrischen Standardmethoden alternative exakte Darstellungsformen für D(P,Q) bzw. $\gamma$ gefunden werden, wie z.B. der Ausdruck

$$\gamma = \arccos[\, \cos(y2-y1) \, {}^* (1-\sin^2((x1-x2)/2)) - \, \cos(y2+y1) \, {}^* \sin^2((x1-x2)/2) \,],$$

der mit einer geringeren Anzahl rechenaufwendiger trigonometrischer Funktionsauswertungen als der zuerst angegebene auskommt.

Mittels näherungsweiser Berechnungsmethoden für die obigen Ausdrücke läßt sich der Berechnungsaufwand für D(P,Q) noch weiter verringern.

**Patentansprüche**

1. Verfahren zum Ermitteln des Leitwegs einer von einem an einem Ursprungsknoten angeschlossenen Endgerät zu einem an einem Zielnetzknoten angeschlossen Zielendgerät aufzubauenden Verbindung innerhalb eines Kommunikationsnetzes mit einer Vielzahl von Netzknoten und zwischen diesen Netzknoten verlaufenden Netzkanten, unter Verwendung des Dijkstra-Routing-Algorithmus, **gekennzeichnet** durch Ermitteln der Längen der Netzkanten zwischen den einzelnen Netzknoten des Kommunikationsnetzes auf der Grundlage von den einzelnen Netzknoten zuordenbar gespeicherten Angaben geografischer Koordinaten und durch Bestimmen des kürzesten Leitwegs entlang der Netzkanten mit Hilfe des Dijkstra-Routing-Algorithmus unter Berücksichtigung der ermittelten Netzkantenlängen.

Europäisches
Patentamt

**EUROPÄISCHER RECHERCHENBERICHT**

Nummer der Anmeldung

EP 98 10 4709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 5 561 790 A (FUSARO) 1.Oktober 1996 <br> * Spalte 1, Zeile 40 - Zeile 65 * <br> * Spalte 3, Zeile 14 - Zeile 45 * <br> --- | 1 | H04Q3/66 <br> H04Q3/00 |
| A | MACGREGOR ET AL.: "Optimized k-shortest paths Algorithm for Facility Restoration" SOFTWARE - PRACTICE AND EXPERIENCE, Bd. 24, Nr. 9, September 1994, Seiten 823-834, XP000655473 <br> * Zusammenfassung * <br> * Seite 824, Zeile 1 - Seite 825, letzte Zeile * <br> ----- | 1 | |

RECHERCHIERTE
SACHGEBIETE (Int.Cl.6)

H04Q

Der vorliegende Recherchenbericht wurde für alle Patentansprüche erstellt

| Recherchenort | Abschlußdatum der Recherche | Prüfer |
|---|---|---|
| DEN HAAG | 1.Juli 1998 | Lambley, S |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie,übereinstimmendes
Dokument

EPO FORM 1503 03.82 (P04C03)